# EUROPEAN PATENT APPLICATION

(11) **EP 0 869 334 A1**
(43) Date of publication of application: **07.10.1998**
(21) Application number: 97940169.2
(22) Date of filing: 18.09.1997
(51) Int. Cl.: G01D 11/30, H02B 1/044

(54) **IMPROVEMENTS TO MEASUREMENT OR CONTROL INSTRUMENTS**

(30) Priority: 14.10.1996 ES 9602163
(71) Applicant: S.A. Sistel, 08206 Sabadell (ES)
(72) Inventor: BATET TORRAS, Jordi, E-08206 Sabadell (ES)
(74) Representative: Richebourg, Michel François
(86) International application number: ES9700230
(87) International publication number: WO9816803

(57) **Abstract**

The invention considers that a measurement or control instrument is composed of a display monitor (1) separate from a main body (2) which houses the electrical devices needed to operate the instrument. Components (1) and (2) are provided with electrical contacts (4) and (5) enabling mutual connection through a hole made in a control panel (3), which will act as a stand of the instrument; this instrument also includes means (8) to mutually fasten the components (1), (2) and (3) and a means (7) to seal the joint produced.

## Description

### PURPOSE OF THE INVENTION

This invention refers to improvements introduced in measurement or control instruments, of a type which are fixed onto a control panel and which include a display monitor which displays the measurement or control values and the electrical devices required for operation. These improvements are that the aforementioned electrical devices are housed in a main body which is separate from the display monitor; including the main body and the display monitor, plus complementary means for electrical connection, mechanical fastening between these components and the panel, and sealing the joint produced.

### BACKGROUND OF THE INVENTION

At present, measurement or control instruments used to control industrial and production processes, include a display monitor and the electrical devices required for operation. These components form a whole, indivisible unit, of considerable size.

The rectangular hole of the panel needed to install this instrument can be made by means of drill holes and scroll saw, or by die punching, but both methods are expensive and not very productive.

In both cases, the assembly of the conventional instrument on the panel leads to the secondary task of ensuring the continuous environmental protection of the panel (cabinet, box, etc.).

### DESCRIPTION OF THE INVENTION

To solve the problem explained above, the improvements which are the purpose of this invention, have been introduced to measurement or control instruments.

In accordance with the invention, these improvements mean that the measurement or control instrument is composed of two separate components: The display monitor and the main body, which houses the electrical devices. Both components are provided with means for their electrical connection, and also means to mechanically join them to each other and to the control panel. An elastic means to seal the joint produced, is also foreseen.

This invention signifies that the display monitor and the main body can be electrically connected and disconnected, and fastened and disengaged mechanically, in a quick and simple fashion, thereby simplifying the replacement of either of them in the event of a breakdown, and in all cases, the joint can be easily sealed in each operation. To assembly the instrument on the control panel, a standard dimension hole will simply have to be made on the control panel, to connect and fasten the two components, with the display monitor on the front side of the panel and the main body on the back side of the panel. A sealing gasket is placed between the back surface of the display monitor and the front surface of the panel. The hole in the panel is made using a conventional drill and bit.

As the display monitor has a higher surface than the hole made, the inside of the panel can be easily protected from the environment. To do this, any standard technical method can be used to seal a joint, such as an O-ring or a gasket adhered to the outer edge of the back surface of the display monitor, or simply by covering the entire back flat surface of the display monitor with a layer of standard elastic substance.

The invention also includes a practical and aesthetic advantage in that the display monitors assembled using the improvements of this invention, can always be of standard dimensions, whereas the adapted mechanism on the back part of the panel can be of different dimensions, depending on the state of the art.

### DESCRIPTION OF THE DIAGRAMS

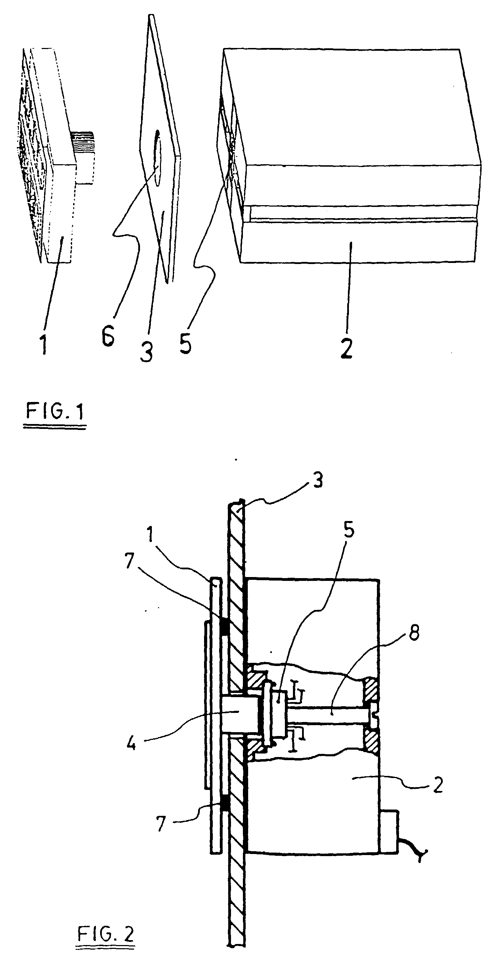

- Figure 1 gives a perspective view of the two components which form the measurement or control instrument and part of the control panel, before assembly.

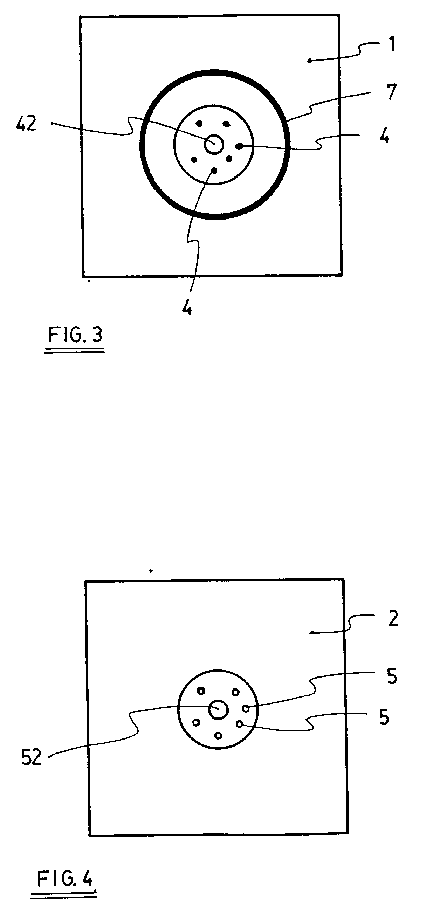

- Figure 2 gives a side view of the measurement instrument, once it has been positioned on the control panel, having partially split these components by means of a vertical cross-section.
- Figure 3 shows a rear elevation view of the display monitor in which the electrical connection parts can be observed, which in this case are plugs and a gasket.
   Figure 4 shows a front view of the main body.

### PREFERENTIAL MANUFACTURE OF THE INVENTION

As can be observed in the aforementioned figures, the control or measurement instrument is composed of a display monitor (1) and a main body (2), where the electrical devices needed for the correct operation of the instrument, are housed. It should be underlined, that these electrical devices are not illustrated here as they are conventional components and can vary depending on the functions which the instrument in question is to carry out.

The display monitor (1) and the main body (2), which are mounted on the control panel (3) which will act as the stand of these components, are provided with electrical contacts (4 and 5), which can be any standard system to physically establish electrical connection, such as plug and socket, retractable pin on printed circuit board, etc., which connect the display monitor (1) to the devices, which are not illustrated, housed inside the main body (2).

Optionally an elastic element (7) can be placed between the display monitor (1) and the panel (3), which on being pressed by these parts, will seal the joint.

To fasten the display (1) and the main body (2), the invention includes a fastening element, which can be any standard system known to physically and reversibly fasten the aforementioned parts, such as threading, bolting, bayonet, rack, clamping, etc. In this case, it consists of a clamping screw (8) inserted through a defined hole through the main body (2) and threaded on the display monitor (1), remaining fixed with respect to the panel (3).

In the example shown, the clamping screw (8) is coaxial with the electrical connection contacts (4 and 5), which define several axial holes (42 and 52) to pass the screw (8). To assemble the instrument, it is sufficient to make one standard hole (6) in the panel (3).

The back flat surface of the display monitor (1) is covered with a layer of elastic substance which is not more than one millimetre thick, which after mechanically fastening to the panel (3) surface, the joint between both surfaces will be sealed from the environment.

## Claims

1. Improvements introduced in measurement or control instruments, of the type anchored on a control panel (3) and which include a display monitor in which the measurement or control values are displayed, and the electrical devices required for its performance. These improvements are distinctive because they consist of two separate elements, which form part of the display monitor (1) and a main body (2) which houses the electrical devices required for the operation of the instrument, means for the electrical connection of both components (1) and (2), means to mechanically fasten them to each other and to the control panel (3) which acts as a stand for these components, and an elastic means (7) to seal the joint produced through the hole (6).

2. Following the previous claim, these improvements are distinctive because the electric connection of the display monitor (1) to the devices housed in the main body (2) is by means of a set of contacts according to any standard system, to physically and reversibly make the electrical connection.

3. Following the previous claims, these improvements are distinctive because the operation of the electrical connection between the display monitor (1) and the main body (2) is separate from the mechanical fastening system between both components, whenever standard methods are used to do this.

4. Following claim 1, these improvements are distinctive because the joint produced on moving the display monitor (1) nearer the panel surface (3), is sealed from the environment by using an elastic element (7).
